# EUROPEAN PATENT SPECIFICATION

(11) **EP 0 385 343 B1**
(45) Date of publication and mention of the grant of the patent: **12.01.1994**
(21) Application number: 90103694.7
(22) Date of filing: 26.02.1990
(51) Int. Cl.: A44B 19/46

(54) **Apparatus for manufacturing slide fastener stringers**
Vorrichtung zum Erstellen von Reissverschlussbändern
Dispositif pour fabriquer des bandes de fermetures à glissière

(30) Priority: 27.02.1989 JP 45780/89
(43) Date of publication of application: 05.09.1990
(73) Proprietor: YKK CORPORATION, Chiyoda-ku, Tokyo (JP)
(72) Inventor: Matsuda, Yasuhiko, Toyama-shi, Toyama-ken (JP)
(74) Representative: Patentanwälte Leinweber & Zimmermann

(56) References cited:
- CH-A- 200 046
- FR-A- 866 106
- GB-A- 1 309 014
- US-A- 2 003 146
- US-A- 2 227 461
- US-A- 2 262 193

## Description

This invention relates to an apparatus for the manufacture of slide fasteners having a plurality of groups of differently colored coupling elements in selected orders and at predetermined intervals along a longitudinal edge of a stringer tape, the apparatus comprising vertically disposed chute means for feeding the coupling elements.

An apparatus of the type mentioned above is disclosed in US-A-2 262 193 on which the preamble of claim 1 is based. This conventional apparatus is provided with only one single vertically disposed chute for feeding the coupling elements onto the stringer tape edge. Above this chute, there are disposed die parts defining a mold cavity. In a horizontal displaceably supported block, two injection cylinders are disposed which may be fed each with thermoplastic material of different colour. By means of corresponding movement of the block, alternatively one of the two injection cylinders can be connected with the opening of the die parts in order to inject the thermoplastic material of the selected colour into the mold cavity. Therefore, coupling elements of two different colours can be transferred to the chute vertically disposed underneath the die parts in any sequence at all. The movement of the block carrying the die parts is effected via a cam and a cam follower.

It is a deficiency of this conventional apparatus that it is suitable for the manufacture of slide fasteners with coupling elements in only two different colours.

Therefore, it is an object of the present invention to provide an apparatus suitable to manufacture slide fasteners with coupling elements of any number of colours.

This object is realized by the basic concept of the invention set forth in the characterizing portion of Claim 1.

Further developments of the invention are set forth in the depending claims.

The invention will now be described in more detail with reference to an exemplifying, non-limiting embodiment thereof illustrated in the accompanying drawings, in which
Figure 1 is a perspective view of an apparatus for manufacturing slide fastener stringers embodying the invention;
Figure 2 is a diagrammatic, partly sectional, view of a major portion of the apparatus of Figure 1;
Figure 3 is a fragmentary plan view of a fastener stringer having one selected formation of colored coupling elements;
Figure 4 is a view similar to Figure 3 but showing a fastener stringer having another formation of colored coupling elements;
Figure 5 is a diagrammatic elevational view of a coupling element mounted astride a tape edge;
Figure 6 is a diagrammatic elevational view of the coupling element shown clamped onto the tape;
Figures 7a through 9b inclusive are diagrammatic views utilized to explain the operation of the apparatus according to the invention;
Figure 10 is a diagrammatic, partly sectional, view of a modified form of apparatus embodying the invention;
Figure 11 is a fragmentary elevational view of a stopper mechanism incorporated in the apparatus of the invention; and
Figure 12 is a view similar to Figures 3 and 4 but showing a fastener stringer having still another formation of coupling elements.

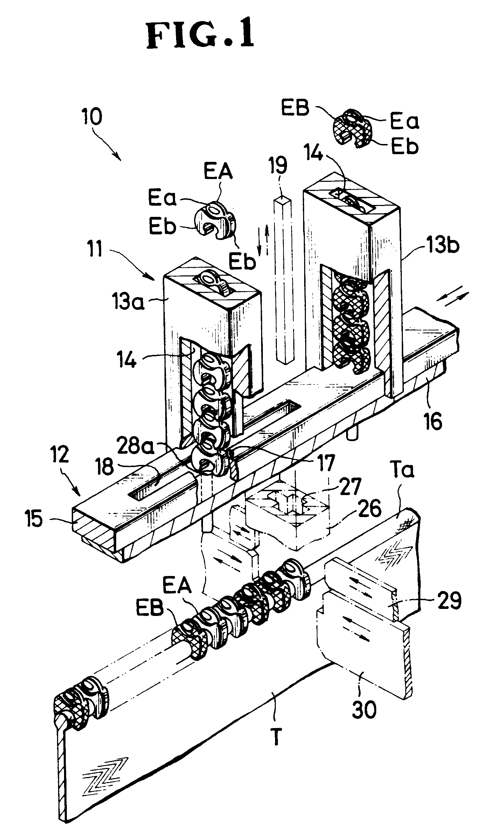

Referring now to the drawings and Figure 1 in particular, there is shown an apparatus 10 embodying the invention which comprises a feed unit 11 and a transfer unit 12. The feed unit 11 includes a pair of vertically disposed feed chutes 13a and 13b each having an elongate vertical opening 14 dimensioned to accommodate a number of vertically aligned coupling elements E supplied from a parts feeder or hopper located up above (not shown). The elements E are made of a metallic or other pliable material and each have a coupling head portion Ea and a pair of bifurcated leg portions Eb. They are let fall by own gravity in succession with the leg portions Eb of one element E directed downwardly in confrontation with the head portion Ea of a preceding element E. A series of elements E of one color are contained in the first chute 13a and another group of elements of a different color in the second chute 13b.

The transfer unit 12 comprises a slide 15 supported on a base 16 for horizontal reciprocating movement thereon. A pocket 17 is formed centrally in the slide 15 for receiving coupling elements E of a given size one at a time from either of the chutes 13a and 13b.

An elongate longitudinal slot 18 is formed in the slide 15 for receiving therethrough a vertically movable positioning bar 19 later described.

A compression spring 20 is connected to the rear end of the slide 15 for normally urging the latter toward a drive cam 21 later described.

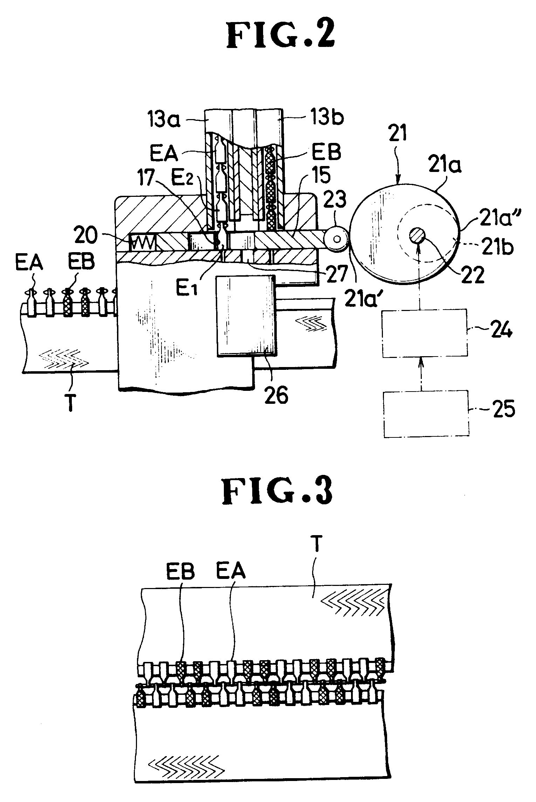

As better shown in Figure 2, the bottom end of each of the chutes 13a, 13b is spaced from the upper surface of the base 16 by a distance substantially equal to the height of the element leg Eb such that the slide 15 can move a leading or lowermost element E₁ forwardly without interference with a next ensuing element E₂.

Horizontal reciprocating movement of the slide 15 is effected by a controlled drive means comprising a large-diameter cam disc 21a and a small-diameter cam disc 21b both mounted coaxially but eccentrically on a drive shaft 22 and a cam follower 23 in the form of a roller rotatably connected to the rear end of the slide 15 and selectively engageable with the cam discs 21a and 21b. There are provided as many cam discs 21a and 21b as are the feed chutes 13a and 13b. The drive shaft 22 extends horizontally in alignment with the cam follower 23 and is driven by a suitable drive 24 which selectively provides rotation and axial movement of the shaft 22 such that the cam follower 23 selectively comes into peripheral engagement with either of the cam discs 21a and 21b.

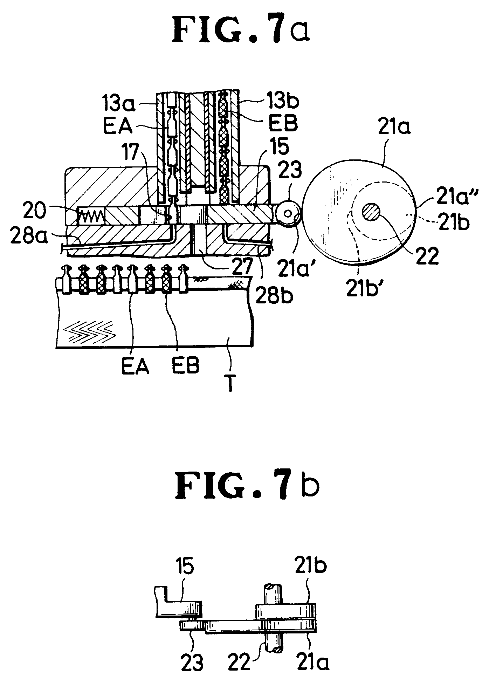

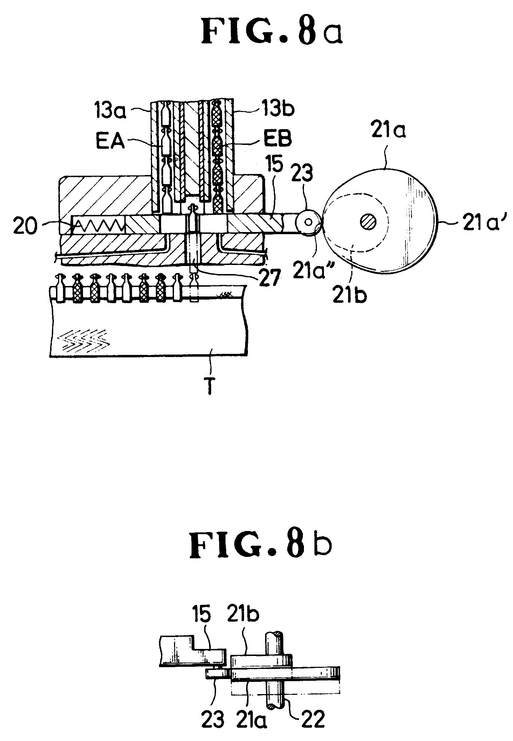

The large-diameter cam disc 21a is eccentrically mounted on the shaft 22 so as to provide diametrically opposed first peripheral surface point 21a′ and second peripheral surface point 21a˝ selectively engageable with the cam follower 23. The first peripheral surface point 21a′ defines with the cam follower 23 a first position in which the pocket 17 registers with the first feed chute 13a to receive the element E₁ therefrom as 20 shown in Figures 7a and 7b. The second peripheral surface point 21a˝ defines with the cam follower 23 a second position in which the pocket 17 registers with a criss-cross opening 27 later described to transfer the element E₁ onto the stringer tape T as shown in Figure 8a and 8b.

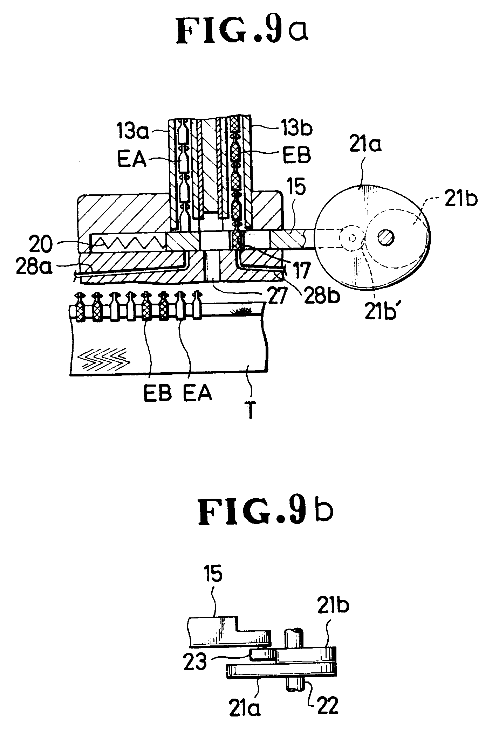

The small-diameter cam disc 21b is eccentrically mounted on the shaft 22 so as to provide a third peripheral surface point 21b′ nearest the shaft 22 which is engageable with the cam follower 23 to define a third position in which the pocket 17 registers with the second chute 13b to receive the element E₁ therefrom as shown in Figures 9a and 9b.

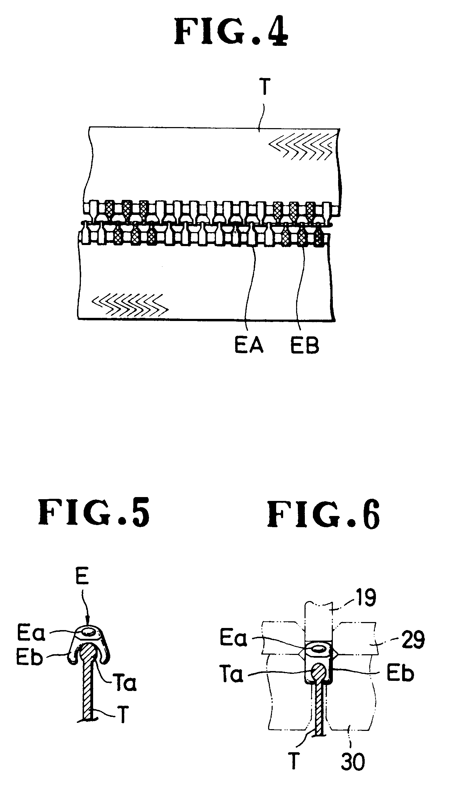

Designated at 25 is a computerized control device operatively associated with the drive 24 and program-controlled so as to provide a variety of patterns for the distribution of coupling elements E on a pair of stringer tapes T such as shown in Figures 3 and 4. Two successive coupling elements EA from the chute 13a alternate with two successive elements EB from the chute 13b as shown in Figure 3, and three successive elements EB alternate with a group of seven elements EA as shown in Figure 4. Various other patters are provided as desired by program-control of the computer device 25 which in turn controls the drive 24 to provide selective rotary and axial movement of the shaft 22 to implement any particular program in a manner well known in the art.

Designated at 26 is an element receiving and transferring chute integral with and extending vertically downwardly from the base 16 and having a criss-cross opening 27 dimensioned to receive an element E and registrable with the pocket 17 in the slide 15.

Designated at 28a and 28b are elongate slits formed in the base 16 in registry with the openings 14, 14 of the chutes 13a and 13b, respectively, for providing suction air from a suction device (not shown) whereby a leading element E₁ is attracted into the pocket 17 in the slide 15.

Referring now to Figures 7a through 9b inclusive, there is illustrated a sequence of operation of the apparatus 10 in which two differently colored coupling elements EA and EB are fed and transferred selectively onto the stringer tape T. As the first cam disc 21a rotates in peripheral engagement at its first peripheral point 21a′ with the cam follower 23, the slide 15 is retracted or moved toward the left as viewed in the drawings against the tension of the spring 20 as far back as the pocket 17 comes into registry with the first chute 13a, whereupon the leading or lowermost element E₁ of the group EA is let fall by own gravity into the pocket 17, as shown in Figures 7a and 7b.

Further rotation of the cam disc 21a substantially through 180°, until its second peripheral point 21a˝ (which is diametrically opposed to the first point 21a′) arrives at the cam follower 23, allows the slide 15 to move forward toward the right as viewed in the drawings under the influence of the tension of the spring 20 as far forth as the pocket 17 registers with the transfer chute 26 to let the element E₁ fall through the opening 27 with the leg portions Eb of the element EA mounted astride over a longitudinal beaded edge Ta of the stringer tape T as shown in Figures 8a and 8b.

The falling of the element E1 of the group EA through the transfer chute 26 is followed by another 180° rotation of the cam 21a which is immediately followed by axial movement of the drive shaft 22 to release the first cam disc 21a from the cam follower 23 and cause the slide 15 through the action of the spring 20 to move further forward until the cam follower 23 engages the second cam disc 21b at the third peripheral point 21b′ thereof, whereupon the pocket 17 registers with the second chute 13b and receives the leading element E₁ of the group EB as shown in Figures 9a and 9b. The cam 21b is then rotated through 180° so as to retract the slide 15 to the position of Figure 8a in which the pocket 17 is brought into registry with the transfer chute 26 to drop the element EB therethrough onto the tape T in the manner already described.

The elements EA and EB thus mounted with their leg portions Eb astride the tape edge Ta as better shown in Figure 5 are held in place by the positioning bar 19 which has descended through the slot 18 and by a pair of retaining bars 29, 29 and clamped firmly to the tape T by a pair of punches 30, 30 as diagrammatically shown in Figure 6. This is followed by inching movement of the tape for a distance substantially corresponding to one element E to wait for a succeeding one of the elements E of the group EA or EB.

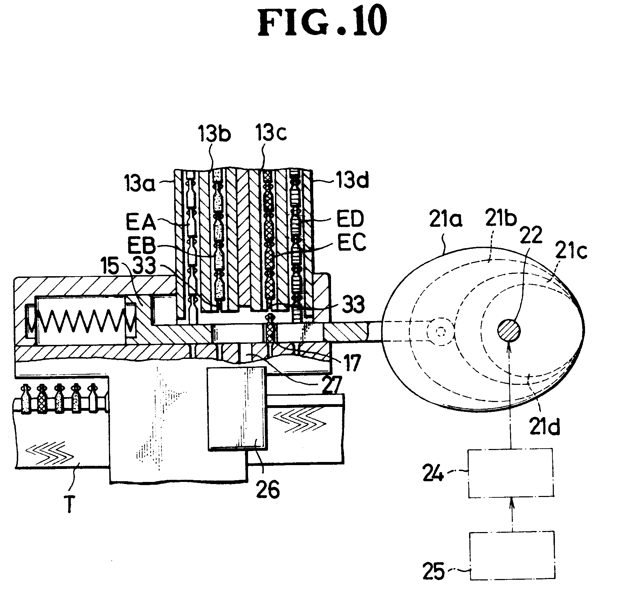

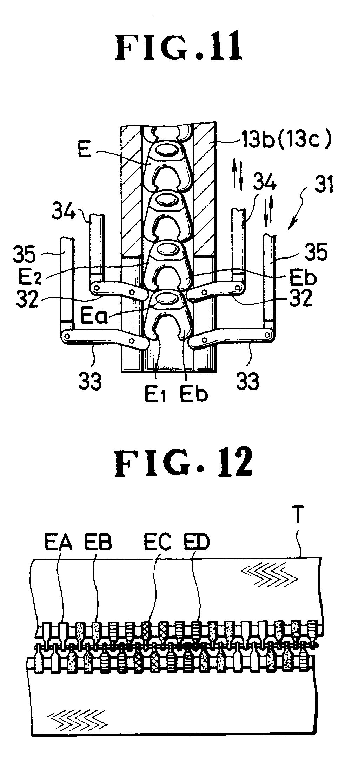

Figure 10 shows a modified form of apparatus 10 which includes a total of four serially arranged feed chutes 13a, 13b, 13c and 13d and hence a total of four cam discs 21a, 21b, 21c and 21d progressively reduced in diameter in this order and mounted coaxially but eccentrically on the drive shaft 22, the arrangement being that a total of four differently colored coupling elements EA, EB, EC and ED can be applied to the stringer tape T in the order shown in Figure 12 and substantially in a manner similar to and apparent from the operating procedure already described in connection with the apparatus 10 shown in Figures 1 through 9b.

The patterns of distribution of the elements E are symmetrical as shown in Figures 3, 4 and 12, but may be made asymmetrical or otherwise varied at will depending upon the programs which may be computerized in the control device 25.

Figure 11 shows a stop mechanism 31 which is useful in preventing spontaneous gravity fall of the elements E particularly in the case where a plurality of feed chutes are installed as shown in Figure 10. The stop mechanism 31, which may be effectively located at the bottom of each of the inner chutes 13b and 13c, comprises two pairs 32 and 33 of first and second stop arms which are pivotally connected to respective links 34 and 35. The first pair stop arms 32 and the second pair 33 are spaced vertically apart from each other by a distance such that the first pair arrest the leg portions Eb of the leading element E₁ and the second pair arrest the leg portion Eb of the next ensuing element E₂ as their respective links 34 and 35 are moved downwardly as by air cylinders not shown to hold the two pairs of stop arms 32 and 33 in closed disposition as shown in Figure 11. The stop mechanism 31 is arranged to operate so that the first pair 32 opens to let fall the leading element E₁ while the second pair 33 still engages and holds the ensuing element E₂. The first pair 32 then closes to receive the ensuing element E₂ upon release from the second pair 33. This cycle of operation is repeated so that the elements E in a vertical row are successively transferred one at a time so as to prevent spontaneous, inadvertent fall of the elements E onto the slide 15.

## Claims

1. An apparatus (10) for the manufacture of slide fasteners having a plurality of groups of differently colored coupling elements (EA - ED) in selected orders and at predetermined intervals along a longitudinal edge (Ta) of a stringer tape (T), the apparatus (10) comprising vertically disposed chute means for feeding the coupling elements, characterized by a plurality of vertically disposed chutes (13a - 13d) for feeding respective groups of colored coupling elements (EA - ED), a horizontally disposed base (16), a transfer chute (26) integral with said base (16) and having an opening (27), a slide (15) supported on said base (16) for horizontal reciprocating movement and having a pocket (17) registrable with one of said chutes (13a - 13d) and with said opening (27) for transferring said coupling elements (EA - ED) one at a time onto the tape edge (Ta), a controlled drive means comprising cam members (21a - 21d) and a cam follower (23) and adapted to effect horizontal reciprocating movement of said slide (15), said cam mebers (21a - 21d) each being in the form of discs mounted coaxially but eccentrically on a drive shaft (22) and rotatable therewith between a first position in which said pocket (17) registers with one of said chutes (13a - 13d) and a second position in which said pocket (17) registers with said opening (27), and a program-control drive device (24, 25) adapted to provide selective rotary and axial movement of said drive shaft (22).

2. An apparatus (10) according to claim 1 characterized in that a biasing means (20) is adapted to urge said slide (15) normally toward said controlled drive means.

3. An apparatus (10) according to claim 1 characterized in that said cam discs (21a - 21d) are reduced in diameter progressively in this order.

4. An apparatus (10) according to claim 1 characterized in that a stop mechanism (31) is located at the bottom of selected ones of said chutes (13a - 13d) and adapted to releasably arrest and hold said coupling elements (EA - ED) from spontaneous gravity fall onto said slide (15).

## Patentansprüche

1. Vorrichtung (10) zur Herstellung von Reißverschlüssen, die mehrere Gruppen von unterschiedlich gefärbten Kuppelgliedern (EA - ED) haben, die in einer gewählten Reihenfolge und in bestimmten Abständen entlang einem Längsrand (Ta) des Tragbandes (T) angeordnet sind, wobei die Vorrichtung (10) eine vertikal angeordnete Rutscheneinrichtung zum Zuführen der Kuppelglieder umfaßt, **gekennzeichnet** durch mehrere vertikal angeordnete Rutschen (13a - 13d) zum Zuführen der betreffenden Gruppen von gefärbten Kuppelgliedern (EA - ED), eine horizontal angeordnete Basis (16), eine Überführungsrutsche (26), die mit der Basis (16) einstückig ist und eine Öffnung (27) hat, einen Schlitten (15), der auf der Basis (16) zu einer horizontalen hin- und hergehenden Bewegung abgestützt ist und eine Tasche (17) hat, die mit einer der Rutschen (13a - 13d) und mit der Öffnung (27) zur Deckung bringbar ist, um jeweils eines der Kuppelglieder (EA - ED) auf den Tragbandrand (Ta) zu überführen, eine gesteuerte Antriebseinrichtung mit Steuerkurven (21a - 21d) und einem Kurvennachläufer (23), die eine horizontale hin- und hergehende Bewegung des Schlittens (15) bewirken kann, wobei die Steuerkurven (21a -21d) jeweils die Form von Scheiben haben, die koaxial, aber exzentrisch auf einer Antriebswelle (22) angeordnet und mit dieser zwischen einer ersten Stellung, in der die Tasche (17) mit einer der Rutschen (13a -13d) fluchtet, und einer zweiten Stellung verdrehbar sind, in der die Tasche (17) mit der Öffnung (27) fluchtet, und eine Programmsteuerungseinrichtung (24, 25), die eine wahlweise Verdrehung und axiale Bewegung der Antriebswelle (22) bewirken kann.

2. Vorrichtung (10) nach Anspruch 1, **gekennzeichnet** durch Vorspannmittel (20), um den Schlitten (15) normalerweise zu der gesteuerten Antriebseinrichtung hin vorzuspannen.

3. Vorrichtung (10) nach Anspruch 1, dadurch **gekennzeichnet,** daß die Kurvenscheiben (21a - 21d) in dieser Reihenfolge einen abnehmenden Durchmesser haben.

4. Vorrichtung (10) nach Anspruch 1, dadurch **gekennzeichnet,** daß ein Haltemechanismus am unteren Ende der ausgewählten Rutschen (13a - 13d) angeordnet ist, der die Kuppelglieder (EA - ED) gegen ein spontanes Herunterfallen auf den Schlitten (15) lösbar arretieren und festhalten kann.

## Revendications

1. Appareil (10) pour fabriquer des fermetures à glissière qui comportent une pluralité de groupes d'éléments d'accouplement (EA-ED) de différentes couleurs suivant un ordre sélectionné et à des intervalles prédéterminés le long du bord longitudinal (Ta) d'une bande d'accrochage (T), l'appareil (10) comprenant un moyen formant goulotte placé verticalement pour amener les éléments d'accouplement, caractérisé par une pluralité de goulottes (13a-13d) placées verticalement pour amener des groupes respectifs d'éléments d'accouplement colorés (EA-ED), une base (16) placée horizontalement, une goulotte de transfert (26) faisant corps avec ladite base (16) et comportant un orifice (27), une glissière (15) supportée sur ladite base (16) pour un mouvement horizontal de va-et-vient et comportant une poche (17) pouvant être mise en correspondance avec l'une desdites goulottes (13a-13d) ainsi qu'avec ledit orifice (27) afin de transférer lesdits éléments d'accouplement (EA-ED), un à la fois, sur le bord de la bande (Ta), un moyen d'entraînement commandé comprenant des éléments formant cames (21a-21d) et un suiveur de came (23) apte à provoquer le déplacement horizontal de va-et-vient de ladite glissière (15): lesdits éléments formant cames (21a-21d) ayant chacun la forme de disques montés coaxialement mais excentriquement sur un arbre d'entraînement (22) avec lequel ils peuvent tourner entre une première position dans laquelle ladite poche (17) est en regard de l'une desdits goulottes (13a-13d) et une seconde position dans laquelle ladite poche (17) est en regard dudit orifice (17), et un dispositif d'entraînement (24-25) commandé par programme, apte à fournir sélectivement un mouvement rotatif ou axial dudit arbre d'entraînement (22).

2. Appareil (10) selon la revendication 1, caractérisé en ce qu'un moyen de sollicitation (20) est apte à pousser ladite glissière (15) normalement vers ledit moyen d'entraînement commandé.

3. Appareil (10) selon la revendication 1, caractérisé en ce que lesdits disques de cames (21a-21d) ont, dans cet ordre, un diamètre qui diminue progressivement.

4. Appareil, selon la revendication 1, caractérisé en ce qu'un mécanisme d'arrêt (31) est place au bas de certaines desdites goulottes (13a-13d) sélectionnées, et est apte à arrêter de façon libérable lesdits éléments (EA-ED) et les empêcher de tomber spontanément par gravité sur ladite glissière (15).
